# EUROPEAN PATENT APPLICATION

(11) **EP 4 000 380 A1**
(43) Date of publication of application: **25.05.2022**
(21) Application number: 21207856.2
(22) Date of filing: 11.11.2021
(51) Int. Cl.: A01F 29/00, A01F 29/04

(54) **BALE SPREADER AND SPREADER ROTOR**

(30) Priority: 12.11.2020 NZ 20769890
(71) Applicant: Hustler Equipment Limited, Hastings 4122 (NZ)
(72) Inventor: Taylor, Burgen, 4130 Havelock North (NZ); Currie, Brent, 4120 Hastings (NZ); Currie, Richard, 4130 Havelock North (NZ)
(74) Representative: Stanier, David Charles

(57) **Abstract**

A bale spreader having a chassis, one or more feed conveyors mounted to the chassis and a spreader rotor mounted to the chassis. The one or more feed conveyors are configured to transport material from a bale along a feed path. During spreading, the spreader rotor receives the material from the feed path and the axis of the spreader rotor is higher than the feed path. The spreader rotor can be movable between a first position in the feed path and second position not in the feed path. The spreader rotor can be driven by a belt. The feed conveyor(s) may be a plurality of feed drums. One of the feed drums can have teeth that extend between flails of the spreader rotor in use. The flails can rotate with their broad sides forward. The spreader can also have a conveyor platform for round bales and another platform for square bales that can be placed over the conveyor platform.

## Description

### FIELD

This invention relates to a bale spreader. This invention also relates to a spreader rotor.

### BACKGROUND

Bedding material such as hay may be spread by special purpose spreading machines or by bale feeders with attachments for spreading bedding material. Spreading machines typically propel material from a bale a significant distance from the machine to cover a large area relatively quickly. This is in contrast to feeders, which typically deposit material near the machine in a relatively narrow strip as they drive. Some spreading machine designs are prone to blockages and can be difficult to unblock. Some spreading machine designs can require a user to completely remove a spreading attachment or to use a separate bale feeder when they want to feed out material from a bale, rather than spreader bedding material. Some spreading machine designs use power take-off drives to drive a spreader rotor, which can be dangerous. Others may use a chain to couple a drive to a spreader rotor, which can be intolerant to changes in tension and can result in damage to the driveline or driver when the spreader rotor is blocked. Some spreading machine designs can be unsuitable for spreading or feeding out material from square bales. Some spreading machine designs can produce large amounts of dust. Some spreading machine designs can be relatively inefficient, requiring a high power input to adequately spread bedding material.

### SUMMARY

According to one example embodiment there is provided a bale spreader comprising:
a chassis;
one or more feed conveyors configured to transport material from a bale along a feed path, each feed conveyor being mounted to the chassis; and
a spreader rotor mounted to the chassis;
the bale spreader configured such that, during spreading:
   the spreader rotor receives the material from the feed path; and
   the axis of rotation of the spreader rotor is higher than the feed path.

According to another example embodiment there is provided a bale spreader comprising:
a chassis,
one or more feed drums configured to transport material from a bale, each feed drum being mounted to the chassis and rotatable about an axis of rotation; and
a spreader rotor mounted to the chassis and rotatable about an axis of rotation;
wherein the spreader rotor is moveable between a first position and a second position such that:
when the spreader rotor is in the first position:
   the spreader rotor receives the material from the one or more feed drums; and
   the axis of rotation of the spreader rotor is higher than the axis of rotation of the highest one of the one or more feed drums; and
when the spreader rotor is in the second position:
   the spreader rotor does not receive the material from the one or more feed drums.

According to another exemplary embodiment there is provided a bale spreader comprising:
a chassis;
a plurality of feed drums configured to transport material from a bale, each feed drum being mounted to the chassis and rotatable about an axis of rotation;
a spreader rotor mounted to the chassis and rotatable about an axis of rotation; and
a spreader chute located at least partly beneath the spreader rotor;
wherein the spreader rotor is moveable between a first position and a second position such that:
when the spreader rotor is in the first position:
   the spreader rotor receives the material from the plurality of feed drums; and
   the axis of rotation of the spreader rotor is higher than the rotational axes of the plurality of feed drums; and
when the spreader rotor is in the second position:
   the spreader rotor does not receive the material from the plurality of feed drums.

According to another exemplary embodiment there is provided a bale spreader comprising:
a feed unit;
a spreader rotor movably coupled to the feed unit to move between a first position in which it receives a feed of a material from the feed unit and a second position in which it does not receive a feed of material from the feed unit;
a driven pulley on the feed unit; and
a belt for coupling the driven pulley to the spreader rotor to drive rotation of the spreader rotor.

According to another exemplary embodiment there is provided a bale spreader comprising:
a chassis;
a feed drum rotatably mounted to the chassis, the feed drum having a feed drum body and one or more feed drum teeth having a feed drum tooth length attached to the feed drum body; and
a spreader rotor rotatably mounted to the chassis, the spreader rotor having a spreader rotor body and one or more flails having a flail length attached to the spreader rotor body;
wherein:
the feed drum body and the spreader rotor body are separated by a separation distance; and
the feed drum tooth length is less than the separation distance; and
the flail length is less than the separation distance; and
the sum of the feed drum tooth length and the flail length is greater than the separation distance.

According to another exemplary embodiment there is provided a bale spreader comprising:
a chassis;
a feed drum rotatably mounted to the chassis, the feed drum having one or more feed drum teeth attached thereto; and
a spreader rotor rotatably mounted to the chassis, the spreader rotor having a plurality of flails attached thereto;
configured such that, when rotating and fully extended from the spreader rotor, the flails define one or more regions therebetween and one or more of the feed drum teeth extend into the region(s).

According to another exemplary embodiment there is provided a bale spreader comprising:
a feed conveyor for transporting material from a bale;
a conveyor platform for driving movement of a bale thereon, the conveyor platform including one or more moving floor members; and
a second platform selectively positionable over the conveyor platform to support a bale above the moving floor members.

According to another exemplary embodiment there is provided a spreader rotor comprising:
one or more flail teeth; and
one or more fixed teeth;
wherein each flail tooth has one or more broad sides and one or more narrow sides and is arranged with a broad side facing the direction in which the flail moves when the spreader rotor is rotated about its longitudinal axis.

The spreader rotor may be movable between a first position and a second position such that:
when the spreader rotor is in the first position it receives the material from the feed path; and
when the spreader rotor is in the second position it does not substantially receive the material from the feed path.

One or more of the feed conveyors may be feed drums.

One or more of the feed conveyors may be feed belts.

The axis of rotation of the spreader rotor may be higher than the axis of rotation of the highest one of the one or more feed drums; and when the spreader is in the second position: the spreader rotor does not receive the material from the one or more drums.

The bale spreader may further comprise a spreader chute located at least partly beneath the spreader rotor.

The spreader rotor may include one or more flails.

The length of each flail may be between 5 mm and 40 mm less than the separation between the spreader rotor and a lower wall of the chute.

The length of each flail may be between 10 mm and 25 mm less than the separation between the spreader rotor and the chute.

The spreader rotor may comprise one or more fixed teeth.

The length of the one or more fixed teeth may be between 5 mm and 40 mm less than the separation between the spreader rotor and the chute.

The length of the one or more fixed teeth may be between 10 mm and 25 mm less than the separation between the spreader rotor and the chute.

The tip of each of the one or more fixed teeth may have a backward rake such that the tooth is shorter at its trailing edge than at its leading edge.

The tip may have a backward rake of between 10° and 30°.

The feed drums may comprise a lower feed drum for removing material from the bale and an upper feed drum for providing the material to the spreader rotor.

The lower feed drum may comprise a plurality of teeth that extend into a region between teeth of the upper feed drum.

The lower feed drum may comprise one or more webs extending between one or more pairs of the teeth of the lower feed drum.

The upper feed drum may be configured to rotate at a greater speed than the lower feed drum.

The upper feed drum may be configured to rotate at between 1.5 and 5 times the speed of the lower feed drum.

The chute may comprise a lower wall that is tilted upwards such that its downstream end is higher than its upstream end.

The lower wall may be tilted upwards at an angle between 10° and 25° to the horizontal.

The chute may further comprise an upper wall that is tilted upwards at an angle between 10° and 25° to the horizontal.

The bale spreader may further comprise a bale restraint bar above the feed drums or feed path.

The bale restraint bar may be configured to contact the top of a square bale and break off clumps of material.

The bale restraint bar may be freely rotatable about its longitudinal axis.

The bale spreader may comprise: a feed unit; a driven pulley on the feed unit; and a belt for coupling the driven pulley to the spreader rotor to drive rotation of the spreader rotor; wherein the spreader rotor is movably coupled to the feed unit to move between a first position in which it receives a feed of a material from the feed unit and a second position in which it does not receive a feed of material from the feed unit.

One of the feed conveyors may be driven separately from the driven pulley of the spreader.

The bale spreader may comprise a conveyor on the feed unit to provide feed of material to the spreader rotor, the conveyor being driven separately from the driven pulley of the spreader.

The spreader rotor may be pivotably mounted to pivot between the first and second positions.

Pivoting between the first and second positions may comprise moving along a path substantially lying in a vertical plane.

The second position may be higher than the first position.

One of the one or more feed drums may have one or more feed drum teeth attached thereto; and wherein the spreader rotor has a plurality of flails attached thereto; configured such that, when rotating and fully extended from the spreader rotor, the flails define one or more regions therebetween and one or more of the feed drum teeth extend into the region(s).

The spreader rotor may further comprise one or more fixed teeth attached to the spreader rotor. The fixed teeth may each have a first fixed tooth length that is approximately the same as the flail length.

The bale spreader may further comprise a spreader chute located at least partly below the spreader rotor, the bale spreader having an acceleration region between the spreader rotor and the chute in which the spreader rotor accelerates material to be spread.

The feed drum teeth may extend into the acceleration region.

The acceleration region may cover between 30° and 70° of arc around the spreader rotor.

The bale spreader may comprise: a conveyor platform for driving movement of a bale thereon, the conveyor platform including one or more moving floor members; and a second platform selectively positionable over the conveyor platform to support a bale above the moving floor members.

The conveyor platform may be configured to support a round bale and the second platform may be configured to support a square bale.

The second platform may be positioned at a plurality of different heights above the conveyor platform.

The conveyor platform may be configured to tilt, thereby tilting the second platform, to cause the bale to be urged towards the feed conveyor by gravity.

The bale spreader may further comprise a barrier at the end of the second platform that is away from the feed conveyor.

The feed conveyor may comprise a feed drum having one or more teeth.

The feed drum rotation speed and moving floor member speed may be such that the linear speed of the tip of each tooth is approximately equal to the linear speed of the moving floor members.

The spreader rotor may comprise: one or more flail teeth; and one or more fixed teeth; wherein each flail tooth has one or more broad sides and one or more narrow sides and is arranged with a broad side facing the direction in which the flail moves when the spreader rotor is rotated about its longitudinal axis.

The broad sides of the flails may be rectangular.

The broad sides of the flails may have a length:width aspect ratio of between 2:1 and 5:1.

The flails may be attached to the drum at a plurality of angular positions about its longitudinal axis.

The angle between successive flails along the longitudinal axis of the spreader rotor may be 90° and 5°.

The flails may be arranged in pairs, each pair including two flails at the same position along the longitudinal axis of the spreader rotor and on opposing sides of the spreader rotor.

At least one fixed tooth may be located longitudinally between successive flails along the spreader rotor.

The spreader rotor may comprise one or more tooth-and-flail assemblies, each tooth-and-flail assembly comprising one or more of the fixed teeth, one or more of the flails, and two mounting plates, wherein the one or more flails are pivotally coupled between the mounting plates and the one or more fixed teeth extend from the mounting plates.

Each tooth-and-flail assembly may comprise two flails pivotably coupled between the mounting plates.

According to a further aspect of the invention, there is provided a bale spreader comprising the spreader rotor.

The bail spreader may be configured to be latched to an agricultural vehicle.

It is acknowledged that the terms "comprise", "comprises" and "comprising" may, under varying jurisdictions, be attributed with either an exclusive or an inclusive meaning. For the purpose of this specification, and unless otherwise noted, these terms are intended to have an inclusive meaning - i.e., they will be taken to mean an inclusion of the listed components which the use directly references, and possibly also of other non-specified components or elements.

Reference to any document in this specification does not constitute an admission that it is prior art, validly combinable with other documents or that it forms part of the common general knowledge.

### BRIEF DESCRIPTION OF THE DRAWINGS

The accompanying drawings which are incorporated in and constitute part of the specification, illustrate embodiments of the invention and, together with the general description of the invention given above, and the detailed description of embodiments given below, serve to explain the principles of the invention, in which:
- **Figure 1**: is a perspective view of a bale spreader according to an embodiment of the invention with a spreader rotor in a first position.
- **Figure 2**: is a perspective view of the bale spreader of Figure 1 with the spreader rotor in a second position;
- **Figure** 3: is a cross-sectional view of the bale spreader of Figures 1 and 2;
- **Figure** 4: is a side view of a bale spreader of according to an embodiment of the invention;
- **Figure** 5: is a view of the bale spreader of Figure 4 from another side; and
- **Figure** 6: is a perspective view of a spreader rotor according to an embodiment of the invention.

### DETAILED DESCRIPTION

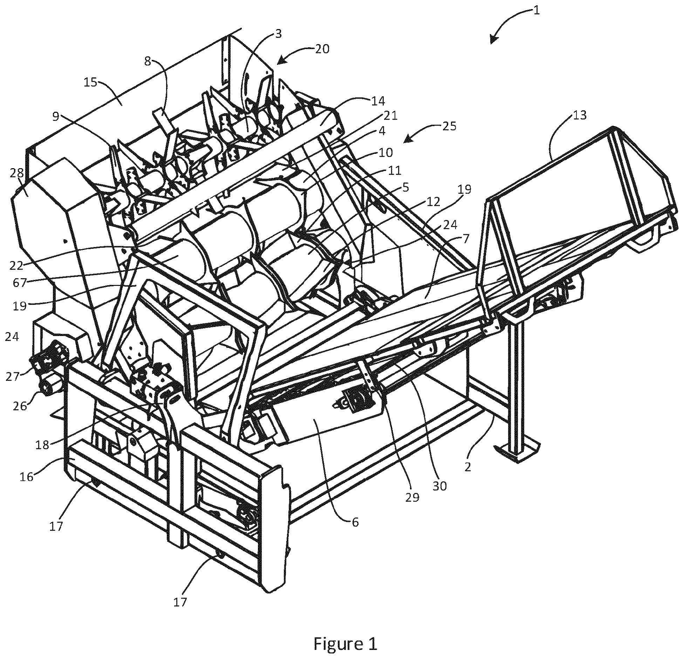

Figure 1 illustrates a bale spreader according to an example embodiment. The bale spreading function will be discussed in the context of spreading bedding material such as straw. This is only one exemplary use and the bale spreader could be used for spreading other baled materials such as feed. The bale feeding function will be described in the context of feeding out feed material such as silage. This is only one exemplary use and the bale spreader (in the bale feeding configuration) could be used for feeding out other baled materials.

The bale spreader 1 includes a chassis 2, feed conveyors mounted to the chassis 2, and a spreader rotor 3 also mounted to the chassis 2. The spreader rotor is provided to propel bedding material away from the bale spreader (rather than just feed it out as a bale feeder does) and spread it over a relatively large area. The spreader rotor in this example includes flails 8. The flails 8 are pivotably mounted to the spreader rotor. They generally extend radially outwards when the spreader rotor is rotating, but they can fold back in to retract when they encounter resistance. The flails may help to propel the material by rotating quickly and providing a large area in contact with the material. Several flails are shown in this example. The number of flails could vary depending on the application.

The spreader rotor in this example includes fixed teeth 9. The fixed teeth may help to chop or break up the bedding material to make it easier to propel from the spreader. Several fixed teeth 9 are shown in this example. The number of teeth could vary depending on the application.

The spreader rotor is part of a spreader unit 20. The spreader unit 20 also includes guard 15 that covers the front and sides of the spreader rotor in use and lower chute wall 21 that defines a chute that is below the spreader rotor in use. The lower chute wall includes slots 22 through which the teeth 10 of the upper feed drum 4 (described in more detail below) can pass in use. This brings the upper feed drum 4 and the spreader unit 20 into close proximity and may improve the transfer of bedding material to the spreader rotor 3 and reduce the amount of material that can fall below the bale spreader.

In this example the feed conveyors are feed drums 4 and 5. In alternative examples, the feed conveyors could be other conveyors such as conveyor belts that perform the functions of the feed drums. In this example, the bale spreader has two feed conveyors (drums 4 and 5), but there may be more than two feed conveyors or only one feed conveyor.

The feed drum 5 is a lower feed drum. The lower feed drum 5 removes bedding material from a bale and transfers it to the upper feed drum 4. The lower feed drum 5 has teeth 11 and webs 12 between pairs of the teeth 11. The teeth 11 generally extend radially outwards. The teeth 11 are pointed and designed to engage with material in the bale, remove it from the bale and transfer it to the upper feed drum 4. Neighbouring teeth 11 that are not connected by webs have a gap 24 between them into which the teeth 10 of the upper feed drum can extend. This may aid in transferring the bedding material from the teeth 11 of the lower drum 5 to the teeth 10 of the upper drum 4. The webs 12 that extend between pairs of teeth 11 may provide rigidity to the teeth 11 to keep the gaps 24 open and prevent the teeth 10 and 11 from clashing. The webs 12 may also act like paddles to help to lift bedding material up to a position where it can be collected by the upper feed drum 4. The teeth 10 of the upper feed drum 4 extend generally radially outwards from the body 67 of the upper feed drum.

The bale spreader 1 also includes a bale restraint bar 14. The bale restraint bar is located above the feed drums 4 and 5 to contact the top of a square bale. Bales sometimes contain large clumps known as biscuits. These can be particularly bad when a bale has been left out in the rain and subsequently dried. Large clumps or biscuits may be difficult for some bale feeders or spreaders to process and may cause damage or excessive wear. The bale restraint bar 14 may break off clumps of a manageable size when the bale is forced against it. The bale restraint bar is rotatably mounted to the chassis so that it can freely rotate.

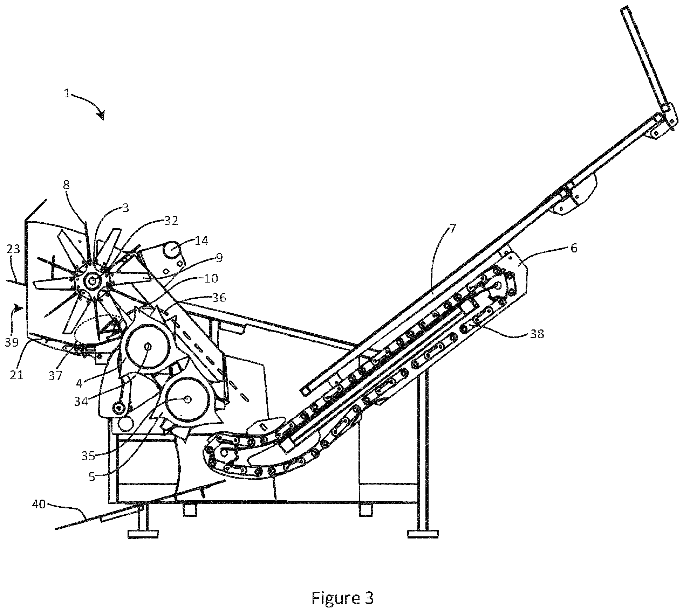

In use, bales can be located on one of the platforms 6 and 7. The platform 6 is a conveyor platform. The conveyor platform is designed for use with round bales. The conveyor platform includes one or more moving floor members which can rotate the round bale to unroll it as it is fed to the feed drums 4 and 5. In this example, the moving floor members are floor bars 30 driven by floor chains (shown in Figure 3). Alternatively, the conveyor platform 6 could employ a conveyor belt, one or more driven rollers, or another suitable moving floor member to drive movement of a round bale.

The platform 7 is designed for use with square bales. The platform 7 is located over the conveyor platform 6 when used with square bales. This allows it to keep a square bale off the conveyor platform 6 - which may not be well suited to use with square bales - and raise the bale up the to correct height for the feed drums 4 and 5 to remove material from the bale and transfer it to the spreader rotor or feed it directly out of the machine. The user can select whether to use the platform 7 depending on the type of bale used. In this example, the platform 7 can be easily attached to, and detached from, the platform 6 using bolts 29. The platform 7 can also be set to different heights above the platform 6 to accommodate different sizes of bales. In this example, there are three different bolt holes provided for each bolt 29 to allow the platform 7 to be attached at three different heights. Alternatively, the platform 7 could be pivotable at the end farthest from the feed drums 4 and 5 so that the end near the feed drums can be raised without raising the whole platform 7.

The platforms 6 and 7 slope downwards towards the feed drums 4 and 5 so that the bale is urged towards the feed drums by gravity. The platform 6 can be tilted to raise and lower the end farthest from the feed drums 4 and 5. The far end may be lowered when loading bales, for example. The platform 6 can be pivotably mounted to the chassis to permit this tilting. If the platform 7 is attached to the platform 6, it will also be tilted along with the platform 6. A barrier 13 is provided at the far end of the platform t to help keep the bale on the platform. Barriers 19 are also provided at the sides of the machine to help keep bales on either platform 6 or 7.

The feed drums 4 and 5, platforms 6 and 7, and bale restraint bar 14 are part of a feed unit 25. The feed unit 25 can be used to feed material from a bale to the spreader unit 20 when a user wants to spread material, for example for bedding. Alternatively, the feed unit 25 can be used to feed material from a bale directly out of the machine in the manner of a bale feeder. Also provided on the feed unit 25 is a mount 16 for attaching the bale spreader to an agricultural vehicle such as a tractor. The mount 16 has apertures 17 for receiving forks or tines of the agricultural vehicle and a latch keeper 18 for allowing the bale spreader to be latched to the vehicle.

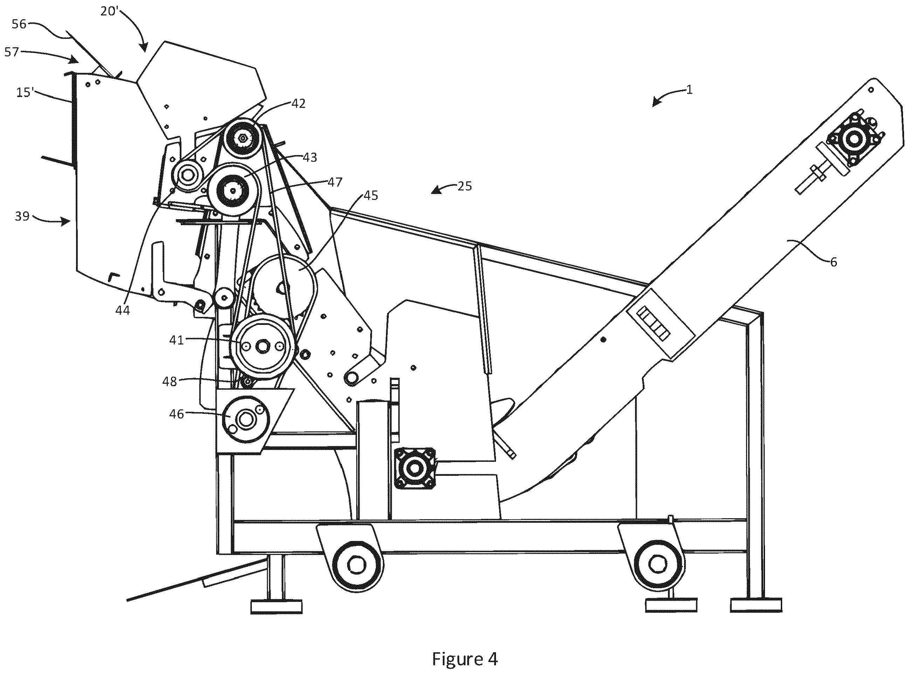

Also shown in Figure 1 are motors 26 and 27. These are provided to drive the spreader rotor 3, feed drums 4 and 5 and the floor chain of the conveyor platform 6. As will be explained more detail with reference to Figure 4, the motor 26 drives the feed drums 4 and 5 and the floor chain of the platform 6; the motor 27 drives the spreader rotor 3. In this example the motors 26 and 27 are hydraulic motors, although other motors could be used. As shown in Figure 1, the motor 27 for driving the spreader rotor 3 is on the feed unit 25. A cover 28 is provided over the drive trains that link the motor 27 to the spreader rotor 3 and the motor 26 to the feed drum 4.

The spreader unit allows the spreader rotor to move between a first position in which it receives the bedding material and a second position in which it does not receive the bedding material. This allows the bale spreader to be converted between a bale spreading configuration and a bale feeding configuration and avoid the need for separate bale spreader and bale feeder machines. The spreader rotor can be mounted, directly or indirectly, to the feed unit such that it can translate and/or pivot between the first and second positions. Other parts of the spreader unit 20 can move along with the spreader rotor. In this example, the spreader rotor 3, guard 15 and chute wall(s) form an assembly that is pivotably coupled to the feed unit to all pivot in a substantially vertical plane to move the spreader rotor between the first and second positions. The bale spreader is shown in the bale spreading configuration in Figure 1, with the spreader rotor in the first position to receive a feed of material from the feed drums 4 and 5.

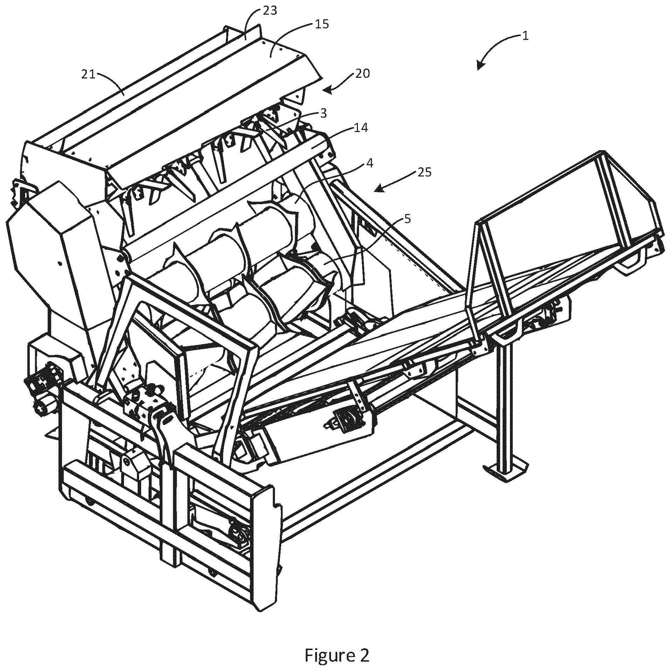

The bale spreader is shown in the bale feeding configuration in Figure 2, with the spreader rotor in the second position. Compared to the bale spreading configuration of Figure 1, the spreader unit 20 has pivoted approximately 90° (clockwise when viewed from the side shown in Figures 1 and 2) such that the spreader rotor is moved out of the path of material fed by the feed drums. In pivoting from the first position to the higher second position, the spreader rotor is moved upwards out of the feed path of material, although there will be associated lateral movement as it moves along an arcuate path between the first and second positions. It can be seen that in the bale feeding configuration of Figure 2 the guard 15 is located above the spreader rotor 3. The lower chute wall 21, which was below the spreader rotor in the bale spreading configuration, is now at the front of the spreader rotor. Also visible in Figure 2 is upper chute lip 23 that may, in combination with the lower chute wall 21, partly define the chute. Upper chute lip 23 may help control the path of the material that is propelled from the spreader unit. The angle at which the chute exits the spreader can be selected to provide good projection of the material from the bale spreader. The angle is set by the lower chute wall 21 and, if it is provided, the upper chute lip 23. These may be at between about 10° and 25°, between about 12° and 20°, or about 15° to the horizontal, with the downstream end of the chute higher than the upstream end.

In the bale feeding configuration, material is withdrawn from a bale by lower feed drum 5 and transferred to the upper feed drum 4. The feed material is fed out from the feed unit by the upper feed drum 4. The bale restraint bar 14 can operate as described above with respect to the bale spreading function.

Figure 3 shows the bale spreader in cross section. In Figure 3, the bale spreader 1 is in the spreading configuration. In this figure, the feed path 36 of material is also generally indicated. The relative heights of the feed drums 4 and 5, spreader rotor 3 and bale restrain bar 14 can be seen. In particular, the axis of rotation of the spreader rotor is indicated at 32. This is higher than the feed path 36 and higher than the axes of rotation 34 and 35 of the feed drums 4 and 5. The bale restraint bar 14 is higher than the axis of rotation 32 of the spreader rotor 3. During a spreading operation, the material is transported along the feed path 36 by the feed drums 4 and 5 to the spreader rotor 3. In the region 37 the material is compressed and accelerated by the spreader rotor 3. The region 37 may cover between about 30° and about 70°, between about 40° and about 60°, or about 50° of arc around the spreader rotor longitudinal axis. The fixed teeth 9 may also chop the material. The material is then propelled out of the chute 39 away from the bale spreader. The flails 8 may be particularly useful for propelling the material a large distance from the bale spreader.

Locating the spreader rotor 3 above the feed path 36 may improve transference of bedding material to the spreader rotor and make it easier to clear any blockages that might occur. Spreader rotors in which a feed path is above the rotational axis of the spreader rotor may be more prone to blockages. If the material is to be propelled over the top of the spreader rotor in such machines, gravity tends to force the material downwards below the spreader rotor, rather than over the top of it, which can cause the material to build up in the wrong areas or drop below the machine without being properly spread. If the material is to be propelled under the spreader rotor in such machines, the incoming material moving along the feed path encounters the spreader members (e.g. teeth) above the centre of rotation. At this height, the spreader members would have a component of their motion opposite to that of the material moving along the feed path. This may cause some material to be knocked backwards along the feed path, or at least hampered in its transference to the spreader rotor and movement out of the spreader. These situations may be avoided with the present arrangement because the feed path from the feed conveyor to the spreader rotor is below the spreader rotor and the material travels under the spreader rotor out of the machine. Gravity will tend to guide material to the correct location to be spread, and material will encounter members (e.g. flails and fixed teeth) of the spreader rotor below the rotation axis 32, where the motion of the members is in the forward direction along the feed path.

Blockages may also be cleared more easily due to the spreader rotor being higher than the feed path/feed drum(s). Blockages will tend to fall under gravity towards the upper feed drum 4, which can be used to clear blockages as discussed below.

In the example of Figure 3, there are two feed drums 4 and 5 and the spreader rotor 4 is located higher than both of them. In alternative arrangements, there could be more feed drums. The spreader rotor may be higher than the highest feed drum.

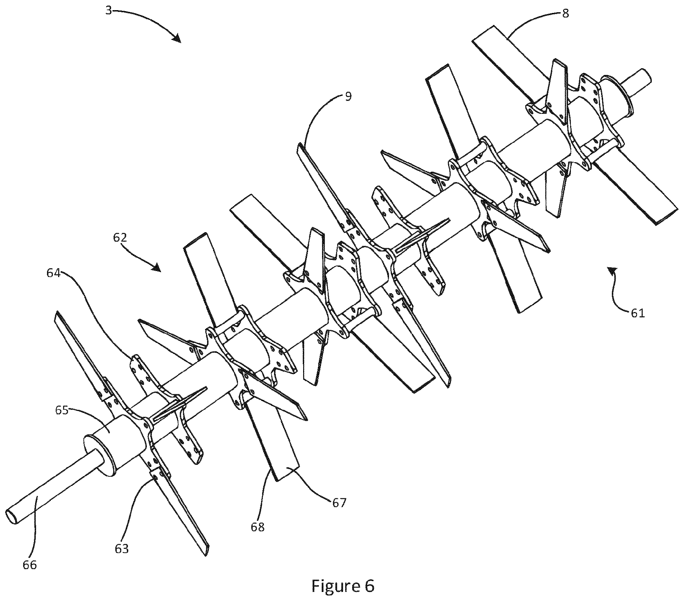

It can be seen that in the view of Figure 3 the paths of the teeth 10 of the upper feed drum will overlap with the paths of the flails 8 of the spreader rotor. In particular, the sum of the lengths of the flails 8 and teeth 10 is greater than the separation distance between the body of the rotor (shown at 65 in Figure 6) and the body of the upper feed drum 4 (shown at 67 in Figure 1). Each of the lengths of the flails 8, fixed teeth 9 and feed drum teeth 10 is less than the separation distance so that they can rotate freely. The teeth 10 may also overlap with the fixed teeth 9. The fixed teeth 9 may be approximately the same length as the flails 8. In one example (discussed in more detail with reference to Figure 6), the fixed teeth may be adjustable to have different lengths. In that case, one of the lengths of the fixed teeth 9 can be approximately the same as the length of the flails. When the spreader rotor is rotating, the flails 8 will extend from the rotor and define regions between the extended, rotating flails. The teeth 10 of the upper feed drum 4 will extend into this region as the upper feed drum 4 rotates. Similarly, the teeth 10 will extend into the regions between the fixed teeth 9.

Having the teeth 10 of the upper feed drum be long enough to extend between the spreader rotor flails 8 and teeth 9 may help to prevent or clear blockages around the spreader rotor 3. If material builds up around the spreader rotor 3, the feed drum teeth 10 may be able to dislodge it as they rotate to prevent blockages forming or to break them up if they have formed. In one example, the feed drum 4 can be driven in reverse if there is a blockage to try to remove material backwards along the feed path 36. Blockages may be most likely to occur in the region 37 where the material is compressed and accelerated. The feed drum teeth 10 extend into this region as the feed drum 4 rotates to target potential blockages in this region 37.

The lengths of the flails 8 and fixed teeth 9 can be selected such that their tips are near the lower chute wall 21 to provide good engagement of the spreader rotor with the material, while still having enough clearance to avoid jamming of the spreader rotor when material gets between the teeth 9 and the chute wall 21. The tips may be between 5 and 40 mm, between 10 mm and 25 mm, or about 18 mm from the lower chute wall 21. The tips of the fixed teeth 9 also have backward rakes - i.e. the tooth is shorter at its trailing edge than at its leading edge. The backward rake may be between about 10° and 30°, between about 15° and 25°, approximately 20°, or just over 20°. This may reduce the chances of the spreader rotor to stall and jam when processing heavy materials.

The bale spreader 1 also includes a ramp 40 to catch material that may fall between the platform 6 and lower feed drum 5, from the feed drums 4 and 5, or from the spreader rotor 3, and guide it to the front of the machine. This may reduce the amount of material falling below the machine, which could otherwise be wasted and could present an obstacle to the machine moving freely over the ground.

The location of the platform 7 above the platform 6 can also be seen in Figure 3. The platform 7 is over the platform 6 everywhere except for small gaps near the lower feed drum 5. A square bale on the platform 7 is held above the moving members of the conveyor platform 6 and can bridge the gaps near the feed drum 5. The floor chain 38 that drives the driven floor members (e.g. floor bars 30 of Figure 1) is shown in profile. In practice, there may be two such floor chains, one at each side of the platform, with the floor bars extending between and connected to the two chains.

Figure 4 is a side view of the bale spreader 1 with the cover (28 in Figure 1) removed to show the drive trains for the spreader rotor and upper feed drum. Driven pulley 41 is mounted to the feed unit 25. The pulley 41 is driven by the motor 27 of Figure 1. The pulley 41 is coupled to the spreader rotor by belt 47 via a pulley 44 that is attached to the shaft (66 in Figure 6) of the spreader rotor. The belt also passes over idler wheel 42 and tension wheel 43. Tension wheel 43 is biased towards the belt 47 to maintain adequate working tension on the belt. The idler wheel 42 and tension wheel 43 also allow the spreader roller to move between the first and second positions without the belt 47 falling off or becoming so tight that it interferes with the movement of spreader roller. In this example, the spreader unit 20' is pivotably mounted to the feed unit 25. In the spreading configuration shown, the belt 47 has a gooseneck shape due to the wheels 42 and 43. When the spreader unit 20' pivots to the non-spreading configuration (by rotating approximately 90° clockwise, in this figure) the belt straightens out over the wheels 42 and 43. The tension wheel 43 can keep tension on the belt 47 in both positions and during movement between the positions. The diameter of the driven pulley 41 is twice the diameter of the pulley 44 on the spreader rotor, allowing the spreader rotor to rotate at twice the rotational speed of the driven pulley 41.

The belt 47 has better tolerance to variations in tension and length than a chain would. This may be particularly important when the spreader rotor is movable between positions. It would be difficult to mount the spreader rotor to be able to move between spreading and non-spreading positions without changing the distance from the motor. In a chain driven arrangement, the chain may become too slack to stay on its sprockets during movement or it may become so tight that it prevents the spreader rotor from moving between the two positions. A belt, on the other hand, can stretch somewhat and can take up slack to avoid these problems. Also, using a belt to couple the drive motor to the spreader rotor reduces the likelihood of the motor or other parts of the bale spreader being damaged if the spreader rotor gets blocked. If a blockage occurs, the belt will just slip on one or both of the pulleys without putting an undesirably high load on the motor. In a bale spreader with a chain drive or direct drive spreader rotor, there will be no such slipping and the motor or chain may be damaged if a blockage occurs.

The feed unit 25 also has a sprocket 46 that is driven by motor 26 of Figure 1. This is coupled to sprocket 45 by chain 48. Sprocket 45 is connected to the upper feed drum 4 to drive its rotation.

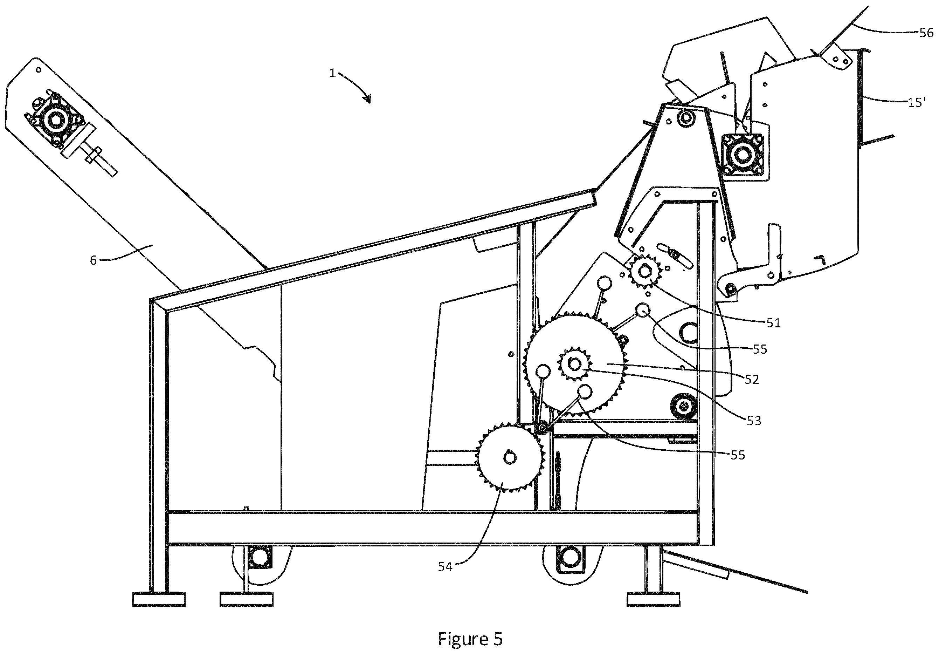

Figure 5 is a view of the bale spreader 1 with the further drive train components for the feed drums and floor chain exposed. These would typically be covered by a cover in use, similar to the cover 28 of Figure 1. Sprockets 51 and 52 are connected to the upper and lower feed drums respectively. A chain (not shown) would couple the sprockets 51 and 52 together. When the upper feed drum is driven by motor 26 as discussed above, sprocket 51 turns to rotate sprocket 52 via the chain (not shown) and drive rotation of the lower feed drum. The diameter of the sprocket 52 is greater than the diameter of the sprocket 51 so that the lower feed drum rotates at a lower speed than the upper feed drum. For example, the diameter of the sprocket 52 can be between 1.5 and 5 times the diameter of the sprocket 51. In this example the diameter of the sprocket 52 is three times the diameter of the sprocket 51. This means that the lower feed drum would rotate at one third of the speed of the upper feed drum.

Also connected to the lower feed drum is a smaller sprocket 53. This is would be coupled to sprocket 54, which drives the floor chain of the conveyor platform 6, by a chain (not shown). Rotation of the lower feed drum thereby drives movement of the floor chain. The diameter of the sprocket 53 is less than the diameter of the sprocket 54 so that the drive rotor for the floor chain rotates at a lower speed than the lower drum. The relative sizes of the sprockets 53 and 54, and hence the rotation speed of the lower drum and the speed of the floor chain, can be configured so that the linear speed at the tips of the teeth of the lower feed drum is approximately the same as the linear speed of the floor bars on the conveyor platform. This may improve transfer of material to the feed drums. In this example, the diameter of the sprocket 53 is half of the diameter of the sprocket 54 and drives the drive rotor of the floor chain at half the rotational speed of the lower feed drum.

Chain tensioners 55 may be provided to maintain a suitable working tension on the chains connecting the sprocket 51 to the sprocket 52 and the sprocket 53 to the sprocket 54. These may be in the form of two-legged torsion springs with a plastic cylinder at the end of each leg for bearing on the chain.

In Figures 4 and 5, the bale spreader is shown without the platform 7 of Figures 1-3. As noted previously, the conveyor platform 6 directly supports round bales when the second platform is removed.

The embodiment of Figures 4 and 5 also has a modified spreader unit 20' compared to the spreader unit 20 of Figures 1 to 3. The spreader unit 20' has modified guard 15'. The backward-sloping upper flap as shown on the guard 15 of Figures 1 to 3 is not present in the modified guard 15' of Figures 4 and 5. Instead, the spreader unit 20' includes a forward-sloping flap 56 above the guard 15'. There is a gap 57 between the flap 56 and the guard 15'. During spreading, material that is not ejected from the chute 39 can travel up the inner side of the guard 15'. Rather than being directed back towards the spreader rotor, as happens with the backward-sloping flap of guard 15, the material is directed out of the gap 57 and forwards by the forward-sloping flap 56. This material can then be spreader from the machine along with the material that is propelled out of the chute 39.

The angle of the flap 56 can be between 15° and 75° to horizontal, between 35° and 60° to horizontal, or about 45° to horizontal. The flap may be adjustably mounted so that the angle can be adjusted to optimise the spreader performance.

The gap 57 between the guard 15' and the flap 56 can be between 30 mm and 150 mm, between 50 mm and 100 mm, or about 70 mm. The guard 15' and/or the flap 56 may be configured to be mounted at different heights to adjust the size of the gap 56.

The flap 56 is between 100 mm and 500 mm, between 150 mm and 300 mm, or about 200 mm in length from the base to the distal end.

Figure 6 shows the spreader rotor in isolation. The spreader rotor 3 has a shaft 66, body 65 and tooth-and-flail assemblies 62. Each tooth-and-flail assembly includes two plates 64. Each flail 8 is pivotably mounted between the two plates 64. Each fixed tooth 9 is attached to a plate 64. There may be one or more flails and one or more teeth in each tooth-and-flail assembly 62. In this example, each assembly 62 has two flails 8 and two fixed teeth 9. The flails 8 of each pair are 180° offset from each other about the longitudinal axis of the spreader rotor - on opposing sides of the spreader rotor. The fixed teeth 9 of each pair are also 180° offset from each other about the longitudinal axis of the spreader rotor - on opposing sides of the spreader rotor.

The tooth-and-flail assemblies 62 are arranged along the spreader rotor 3 at an angular offset from each other. This may make to loading on the spreader rotor more uniform over time because the flails 8 and teeth 9 do not all encounter material at the same time, instead the times at which they encounter material are staggered. The angular offset may be between about 90° and 5°, between about 45° and 15°, or about 30°.

The separation between the tooth-and-flail assemblies along the spreader rotor 3 may be between about 50 mm and about 350 mm, between about 100 mm and about 300 mm, or between about 160 mm and about 250 mm. The fixed teeth and flails are arranged such that there is a fixed tooth longitudinally placed between successive flails along the spreader rotor. This allows the material for each flail to be chopped into short lengths.

The flails 8 each have a flail length, which is the length from the body 65 of the spreader rotor 3 to the tip of the flail. Depending on how the flail is mounted to the spreader rotor, the pivotable flail part may make up all of the flail length, in others part of this length may be provided by part of the plate 64. In this case, the flail length includes a contribution from part of the plate 64 as well as the length of the pivotable flail part. When the spreader rotor rotates, the flails 8 extend and sweep out circular paths with their tips. Between the flails 8 is region generally indicated at 61. This region has a circumference equal to the flail length. When used in a bale spreader with a feed drum, a feed drum tooth may extend into this region as described in more detail with reference to Figure 3.

The flails 8 are arranged to rotate with their broad sides 67 facing in the direction of rotation. This means that as they rotate the present a large area towards material to make good contact with it and to produce a large amount of air flow to help propel the material out of the bale spreader. This may also reduce the amount of dust produced. In the example of Figure 6, the flails have generally rectangular broad sides 67 and narrow sides 68 between the broad sides 67. The broad sides 67 of the flails may be between about 40 mm and about 80 mm, between about 50 mm and about 70 mm, or about 60 mm wide. The broad sides 67 of the flails are longer than they are wide, i.e. they have an aspect ratio of length:width that is greater than 1:1. The aspect ratio may be between 2:1 and 6:1, between 3:1 and 5:1, or about 4:1.

The fixed teeth have a fixed tooth length, which is the length from the body 65 of the spreader rotor 3 to the tip of the fixed tooth 9. As with the flails, some part of this length may be contributed by the plate 64, depending on how the fixed teeth are mounted. The fixed teeth may also be mountable to the plates in different positions to provide different fixed tooth lengths. In this example, the plates 64 have two rows of bolt holes 63, allowing the fixed teeth 9 to be bolted to the plates in two different positions with longer and shorter fixed tooth lengths. In this example, the longer fixed tooth length is approximately equal to the flail length. this length may be about 240 mm. The shorter fixed tooth length may be about 210 mm. The fixed teeth may be between about 40 mm and about 80 mm, between about 55 mm and about 77 mm, or about 65 mm wide. The fixed teeth are oriented with their narrow sides facing the material when the rotate around the longitudinal axis of the spreader rotor in use. This may make them more effective at chopping material.

While the present invention has been illustrated by the description of the embodiments thereof, and while the embodiments have been described in detail, it is not the intention of the Applicant to restrict or in any way limit the scope of the appended claims to such detail. Additional advantages and modifications will readily appear to those skilled in the art. Therefore, the invention in its broader aspects is not limited to the specific details, representative apparatus and method, and illustrative examples shown and described. Accordingly, departures may be made from such details without departure from the spirit or scope of the Applicant's general inventive concept.

## Claims

1. A bale spreader comprising:
a chassis;
one or more feed conveyors configured to transport material from a bale along a feed path, each feed conveyor being mounted to the chassis; and
a spreader rotor mounted to the chassis;
the bale spreader configured such that, during spreading:
the spreader rotor receives the material from the feed path; and
the axis of rotation of the spreader rotor is higher than the feed path.

2. The bale spreader of claim 1, wherein the spreader rotor is movable between a first position and a second position such that:
when the spreader rotor is in the first position it receives the material from the feed path; and
when the spreader rotor is in the second position it does not substantially receive the material from the feed path.

3. The bale spreader of claim 1 or claim 2, wherein one or more of the feed conveyors are feed drums.

4. The bale spreader of claim 1 or claim 2, wherein one or more of the feed conveyors are feed belts.

5. The bale spreader of claim 3, wherein the axis of rotation of the spreader rotor is higher than the axis of rotation of the highest one of the one or more feed drums.

6. The bale spreader of any one of claims 1 to 5, further comprising a spreader chute located at least partly beneath the spreader rotor.

7. The bale spreader of any one of claims 1 to 6, wherein the spreader rotor includes one or more flails.

8. The bale spreader of claim 7, when dependent on claim 6, wherein the length of each flail is between 5 mm and 40 mm less than the separation between the spreader rotor and a lower wall of the chute or between 10 mm and 25 mm less than the separation between the spreader rotor and the chute.

9. The bale spreader of any one of claims 1 to 8, wherein the spreader rotor comprises one or more fixed teeth.

10. The bale spreader of claim 9 when dependent on claim 6, wherein the length of the one or more fixed teeth is between 5 mm and 40 mm less than the separation between the spreader rotor and the chute or between 10 mm and 25 mm less than the separation between the spreader rotor and the chute.

11. The bale spreader of claim 3 or 5 or any one of claims 6 or 7 to 10 when dependent on claim 3 or 5, wherein the feed drums comprise a lower feed drum for removing material from the bale and an upper feed drum for providing the material to the spreader rotor.

12. The bale spreader of claim 11, wherein the lower feed drum comprises a plurality of teeth that extend into a region between teeth of the upper feed drum.

13. The bale spreader of claim 12, wherein the lower feed drum comprises one or more webs extending between one or more pairs of the teeth of the lower feed drum.

14. The bale spreader of any one of claims 11 to 13, wherein the upper feed drum is configured to rotate at a greater speed than the lower feed drum or wherein the upper feed drum is configured to rotate at between 1.5 and 5 times the speed of the lower feed drum.

15. The bale spreader of claim 6 or any one of claims 7 to 14 when dependent on claim 6, wherein the chute comprises a lower wall that is tilted upwards such that its downstream end is higher than its upstream end, for example wherein the lower wall is tilted upwards at an angle between 10° and 25° to the horizontal.

16. The bale spreader of claim 1 comprising:
a feed unit;
a driven pulley on the feed unit; and
a belt for coupling the driven pulley to the spreader rotor to drive rotation of the spreader rotor;
wherein the spreader rotor is movably coupled to the feed unit to move between a first position in which it receives a feed of a material from the feed unit and a second position in which it does not receive a feed of material from the feed unit and wherein one of the feed conveyors is driven separately from the driven pulley of the spreader.

17. The bale spreader of claim 3
wherein one of the one or more feed drums has one or more feed drum teeth attached thereto; and
wherein the spreader rotor has a plurality of flails attached thereto;
configured such that, when rotating and fully extended from the spreader rotor, the flails define one or more regions therebetween and one or more of the feed drum teeth extend into the region(s).

18. The bale spreader of claim 1 or claim 17, wherein the spreader rotor further comprises one or more fixed teeth attached to the spreader rotor, the fixed teeth each having a first fixed tooth length that is approximately the same as the flail length.

19. The bale spreader of any one of claims 1, 17 or 18, further comprising a spreader chute located at least partly below the spreader rotor, the bale spreader having an acceleration region between the spreader rotor and the chute in which the spreader rotor accelerates material to be spread.

20. The bale spreader of claim 19 when dependent on claim 17 or claim 18, wherein the feed drum teeth extend into the acceleration region.

21. The bale spreader of claim 1 comprising:
a conveyor platform for driving movement of a bale thereon, the conveyor platform including one or more moving floor members; and
a second platform selectively positionable over the conveyor platform to support a bale above the moving floor members;
wherein the conveyor platform is configured to tilt, thereby tilting the second platform, to cause the bale to be urged towards the feed conveyor by gravity.

22. The bale spreader of claim 1, wherein the spreader rotor comprises:
one or more flail teeth; and
one or more fixed teeth;
wherein each flail tooth has one or more broad sides and one or more narrow sides and is arranged with a broad side facing the direction in which the flail moves when the spreader rotor is rotated about its longitudinal axis.
